(19) Europäisches Patentamt
European Patent Office
Office européen des brevets

(11) EP 1 347 530 A1

(12) **EUROPEAN PATENT APPLICATION**
published in accordance with Art. 158(3) EPC

(43) Date of publication:
**24.09.2003 Bulletin 2003/39**

(21) Application number: **01963430.2**

(22) Date of filing: **05.09.2001**

(51) Int Cl.[7]: **H01M 10/40**, H01M 6/16, H01G 9/038

(86) International application number:
**PCT/JP01/07689**

(87) International publication number:
**WO 02/021628 (14.03.2002 Gazette 2002/11)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.09.2000 JP 2000272078**
**07.09.2000 JP 2000272079**

(71) Applicant: **BRIDGESTONE CORPORATION**
**Tokyo 104-0031 (JP)**

(72) Inventors:
- **OTSUKI, Masashi,**
**c/o BRIDGESTONE CORPORATION**
**Tokyo 104-0031 (JP)**
- **ENDO, Shigeki,**
**c/o BRIDGESTONE CORPORATION**
**Tokyo 104-0031 (JP)**
- **OGINO, Takao,**
**c/o BRIDGESTONE CORPORATION**
**Tokyo 104-0031 (JP)**

(74) Representative: **Fuhlendorf, Jörn, Dipl.-Ing.**
**Patentanwälte**
**Dreiss, Fuhlendorf, Steimle & Becker,**
**Postfach 10 37 62**
**70032 Stuttgart (DE)**

(54) **ADDITIVE FOR NON-AQUEOUS LIQUID ELECTROLYTE, NON-AQUEOUS LIQUID ELECTROLYTE SECONDARY CELL AND NON-AQUEOUS LIQUID ELECTROLYTE ELECTRIC DOUBLE LAYER CAPACITOR**

(57) The present invention provides an additive for a non-aqueous electrolytic solution including a phosphazene derivative which is solid at 25°C and represented by the following formula (1):

$$(PNR_2)_n \qquad \text{formula (1)}$$

wherein R represents a monovalent substituent or a halogen atom; and n represents a number of 3 to 6. More particularly, the present invention provides a non-aqueous electrolytic solution secondary cell and a non-aqueous electrolytic solution electric double layer capacitor which contain the additive for the non-aqueous electrolytic solution, which have excellent self-extinguishability or flame retardancy, and resistance to deterioration, and which have low internal resistance and excellent conductivity due to low viscosity of the non-aqueous electrolytic solution.

EP 1 347 530 A1

## Description

### Technical Field

The present invention relates to an additive that is added to a non-aqueous electrolytic solution of a non-aqueous electrolytic solution secondary cell, a non-aqueous electrolytic solution electric double layer capacitor, or the like. More particularly, the present invention relates to a non-aqueous electrolytic solution secondary cell and a non-aqueous electrolytic solution electric double layer capacitor which have excellent self-extinguishability or flame retardancy, and resistance to deterioration, and which have low internal resistance and excellent conductivity due to the low viscosity of the non-aqueous electrolytic solution.

### Background Art

Conventionally, nickel-cadmium cells have mainly been used as secondary cells particularly for memory-backups or power sources for the memory-backups of Audio Visual (AV) devices such as video tape recorders (VTRs) and information devices such as personal computers. Recently, the non-aqueous electrolytic solution secondary cell has been drawing a lot of attention as a replacement for the nickel-cadmium cell due to certain advantages, such as possessing high voltage, high energy density, and excellent self-dischargeability. Due to efforts to develop the non-aqueous electrolytic solution secondary cell, several products have become commercially available. For example, more than half of all notebook type personal computers, cellular phones and the like are powered by non-aqueous electrolytic solution secondary cells.

Carbon is often used as the cathode material in non-aqueous electrolytic solution secondary cells, and various organic solvents are used as electrolytic solutions in order to both mitigate the risk when lithium is produced on the surface of cathode, and to increase outputs of voltages. Further, particularly in non-aqueous electrolytic solution secondary cells for use in cameras, alkali metals (especially metal lithium or lithium alloys) are used as the cathode material, and aprotic organic solvents such as ester-based organic solvents are ordinarily used as the electrolytic solutions.

However, although these non-aqueous electrolytic solution secondary cells exhibit excellent performance, safety remains an issue.

Namely, alkali metals (especially metal lithium or lithium alloys) that are used as cathode materials for non-aqueous electrolytic solution secondary cells are extremely volatile with respect to water. Therefore, when the non-aqueous electrolytic solution secondary cell is, for example, imperfectly sealed, water permeates the cell causing a reaction between the cathode materials and the water, whereby hydrogen is generated causing possible combustion of the cell. Further, since metal lithium has a low melting point (about 170°C), when a large amount of current suddenly flows into a cell during a short circuit or the like, an excessive amount of heat is generated thus leading to the possibility of an extremely dangerous situation in that the cell could become molten. Moreover, when the electrolytic solution evaporates or decomposes due to heat-generation of the cell, gas is generated, and the danger arises of the cell exploding or combusting.

In order to solve the aforementioned problems, several proposals have been made. For example, providing a cylindrical cell with a mechanism for suppressing influx of excessive current over a predetermined amount into the cell by operating a safety valve, as well as by disconnecting an electrode terminal when internal pressure of the cell rises in accordance with the increase of the temperature of the cell during a short circuit or overcharge of the cell have been proposed (Nikkan Kogyo Shinbun, *Electronic Technology*, Vol. 39, No. 9, 1997).

However, such a mechanism does not always operate normally. When the mechanism does not operate normally, the possibility still remains that a large amount of heat is generated due to an excessive current influx, leading to the danger of combustion.

Thus, development of non-aqueous electrolytic solution secondary cells has been necessary in which risks such as evaporation, decomposition and combustion of the electrolytic solution are prevented without using safety mechanisms such as safety valves. There is a demand for non-aqueous electrolytic solution secondary cells that can provide superior electrochemical properties, resistance to deterioration, essentially high safety, and stability substantially equal to that of conventional non-aqueous secondary electrolytic solutions.

Further, in accordance with the progresses of technology, non-aqueous electrolytic solution secondary cells that can simultaneously display various properties such as low internal resistance, high electric conductivity and long-term stability are strongly desired.

On the other hand, electric double layer capacitors for replacing cells are the focus of recent attention as a new energy storage product that is environmentally friendly.

The electric double layer capacitor is a condenser used for storing energy in backup power supplies, and auxiliary power supplies and the like, and utilizes electric double layers formed between polarizable electrodes and electrolytes. The electric double layer capacitor has evolved through the years, being developed and commercialized

in the 1970s, passing its initial stage in the 1980s, and since evolving as of the 1990s.

The electric double layer capacitor is different from a cell in which the charging/discharging cycle is a cycle of an oxidation-reduction reaction that triggers a certain material transfer. The difference lies in that the charging/discharging cycle of the electric double layer capacitor is a cycle for electrically absorbing ions from electrolytic solutions at the electrode surface. For this reason, capacitors' charging/discharging properties are superior to those of cells, and those properties hardly deteriorate even if the charging/discharging operation is repeated. Further, the electric double layer capacitor does not involve excessive charging/discharging voltage during charging/discharging, hence simply structured circuits suffice, and thus the capacitor can be manufactured inexpensively. In addition, the capacitor excels over cells in that it is easier to identify residual capacitance. Furthermore, capacitors exhibit resistance to temperature under conditions of temperature within a range of from -30 °C to 90 °C, and moreover, capacitors are pollution-free.

The electric double layer capacitor is an energy storage device comprising positive and negative polarizable electrodes, and an electrolyte. At the interface of the polarizable electrodes and the electrolyte, positive and negative electric charges are arranged to face the electrode with a space of an extremely short distance to thereby form an electric double layer. The electrolyte plays a role as an ion source for forming the electric double layer. Thus, in the same manner as the polarizable electrodes, the electrolyte is an essential substance to control the basic properties of the energy storage device.

As the electrolytes for the electric double layer capacitors, aqueous-electrolytic solutions, non-aqueous electrolytic solutions, or solid electrolytes are conventionally known. However, in terms of improving the energy density of the electric double layer capacitor, the non-aqueous electrolytic solution, which is capable of establishing high operating voltages, has drawn particular attention and thus been widely put to practical use.

Non-aqueous electrolytic solutions have already been put to practical use in which solutes (supporting salts) such as $(C_2H_5)_4P \cdot BF_4$ or $(C_2H_5)_4N \cdot BF_4$ are dissolved in highly dielectric solvents such as carbonates (ethylene carbonate, propylene carbonate), γ-butyrolactone and the like.

However, these non-aqueous electrolytic solutions have the same safety problems as the secondary cells. Namely, when a non-aqueous electrolytic solution electric double layer capacitor combusts due to exothermic heat, the electrolytic solution catches fire, and flames combust to spread over the surfaces thereof, resulting in high risk. As the non-aqueous electrolytic solution electric double layer capacitor generates heat, the non-aqueous electrolytic solution that uses the organic solvent as a base is evaporated or decomposed to generate gas. The generated gas can cause explosion or combustion of the non-aqueous electrolytic solution electric double layer capacitor. Owing to the low flash point of the solvent in the electrolytic solution, there is a high risk of combustion occurring, causing the electrolytic solution to catch fire, so that flames spread over the surfaces.

Therefore, there has been a demand for development of safer non-aqueous electrolytic solution electric double layer capacitors by minimizing the danger caused by explosion or combustion due to evaporation and decomposition of non-aqueous electrolytic solutions.

Lately, with the increase in practical use of non-aqueous electrolytic solution electric double layer capacitors increases, application thereof to electric automobiles, hybrid cars, or the like has been expected. Hence, the demand for improved safety of the non-aqueous electrolytic solution electric double layer capacitor has been increasing more and more.

Accordingly, there is a strong demand for development of a non-aqueous electrolytic solution electric double layer capacitor having various excelling properties such as good prevention of evaporation, decomposition or combustion of the non-aqueous electrolytic solution; good resistance to combustion when a fire source is formed by combustion; high safety due to self-extinguishability or flame retardancy; and resistance to deterioration. Further, in accordance with the fast pace of technology, there is further demand for development of a non-aqueous electrolytic solution electric double layer capacitor in which various properties such as low internal resistance, high electric conductivity, and long-term stability can be achieved at the same time.

Disclosure of Invention

It is an object of the present invention to solve the conventional problems described above, meet various needs, and accomplish the following. Specifically, the present invention provides an additive for a non-aqueous electrolytic solution that is added to a non-aqueous electrolytic solution used in energy storage devices such as the non-aqueous electrolytic solution secondary cell or the like. When added to the non-aqueous electrolytic solution, the additive allows manufacturing of a non-aqueous electrolytic solution energy storage device that has high safety and high stability, excellent flame retardancy and resistance to deterioration, without impairing performance. Since the non-aqueous electrolytic solution containing the additive has low interface resistance, excellent low-temperature characteristics are exhibited. Accordingly, the present invention provides a non-aqueous electrolytic solution secondary cell and a non-aqueous electrolytic solution electric double layer capacitor that exhibit extremely high safety, excellent self-extinguishability or flame retardancy, and excellent resistance to deterioration, as well as low internal resistance and

high conductivity due to low viscosity of the non-aqueous electrolytic solution. This is possible due to incorporation of the additive for the non-aqueous electrolytic solution.

Means for solving the above-described problems are described below:

The present invention is directed to an additive for a non-aqueous electrolytic solution comprising a phosphazene derivative, which is solid at 25°C and represented by formula (1):

$$(PNR_2)_n \qquad \text{formula (1)}$$

wherein R represents a monovalent substituent or a halogen atom; and n represents a number of 3 to 6.

Further, the present invention is directed to a non-aqueous electrolytic solution secondary cell comprising: a non-aqueous electrolytic solution that contains the additive containing the phosphazene derivative represented by formula (1) and a supporting salt; an anode; and a cathode.

Moreover, the present invention is directed to a non-aqueous electrolytic solution electric double layer capacitor comprising: a non-aqueous electrolytic solution that contains the additive containing the phosphazene derivative represented by formula (1) and a supporting salt; an anode; and a cathode.

Best Mode for Carrying Out the Invention

Hereinafter, the present invention will be described in more detail.

[An additive for a non-aqueous electrolytic solution]

An additive for a non-aqueous electrolytic solution of the present invention contains a phosphazene derivative and other components if necessary.

-Phosphazene Derivative-

The phosphazene derivative is contained in the non-aqueous electrolytic solution in order to obtain the effects described below.

The electrolytic solution conventionally used for energy storage devices, such as a non-aqueous electrolytic solution secondary cell containing an aprotic organic solvent as a base, is highly dangerous. This is because when a large amount of current rapidly flows into the electrolytic solution during a short circuit or the like, and heat is extraordinarily generated in the cell, the electrolytic solution evaporates or decomposes to thereby generate gas. Hence, the cell may explode or combust due to the generated gas and heat.

By adding the additive for the non-aqueous electrolytic solution to the conventional non-aqueous electrolytic solutions, the non-aqueous electrolytic solution acquires self-extinguishability or flame retardancy due to the action of nitrogen gas or halogen gas originating from the phosphazene derivative. Accordingly, safety of the non-aqueous electrolytic solution energy storage device containing the additive for the non-aqueous electrolytic solution noticeably improves. Further, since phosphorus acts to suppress chain-decomposition of high polymer materials, which form a part of a cell, self-extinguishability or flame retardancy can be achieved more effectively.

In conventional non-aqueous electrolytic solution energy storage devices, it is considered that compounds resulting from decomposition or reaction of electrolytic solutions or supporting salts present in the non-aqueous electrolytic solution may corrode electrodes and peripheral materials thereof. Further, the decreased amount of the supporting salt in the non-aqueous electrolytic solution itself deteriorates performance of the device. For example, it is considered that corrosion of ester-based electrolytic solutions used as electrolytic solutions in non-aqueous electrolytic solution secondary cells is facilitated to deteriorate due to a $PF_5$ gas generated from lithium ion sources such as an $LiPF_6$ salt as a supporting salt, decomposing into LiF and $PF_5$ over time, or a hydrofluoric gas produced by the generated $PF_5$ gas further reacting with water or the like. Thus, such a phenomenon occurs that conductivity of the non-aqueous electrolytic solution decreases and electrode materials deteriorate due to the hydrofluoric gas generated.

On the other hand, the phosphazene derivative contributes to suppress decomposition or reaction of lithium ion sources such as the $LiPF_6$ and stabilize the same. Accordingly, addition of the phosphazene derivative to a conventional non-aqueous electrolytic solution suppresses decomposition and reaction of the non-aqueous electrolytic solution to thereby inhibit corrosion or deterioration thereof.

Further, the phosphazene derivative is solid at ordinary temperature (25°C), and dissolves in a non-aqueous electrolytic solution when added thereto. Therefore, a viscosity increasing rate of the non-aqueous electrolytic solution is suppressed and maintained to be low insofar as a predetermined amount of the phosphazene derivative is added

to the non-aqueous electrolytic solution. Accordingly, lowering of the viscosity of the non-aqueous electrolytic solution is accomplished, whereby non-aqueous electrolytic solution energy storage devices having low internal resistance and high conductivity can be produced. In addition, since the phosphazene derivative is soluble in the non-aqueous electrolytic solution, the non-aqueous electrolytic solution is excellent in long-term stability.

--Molecular Structure--

The phosphazene derivative is solid at 25°C (ordinary temperature) and represented by the following formula (1):

$$(PNR_2)_n \qquad \text{formula (1)}$$

wherein R represents a monovalent substituent or a halogen atom; and n represents a number of 3 to 6.

In formula (1), R is not particularly limited so long as R is a monovalent substituent or a halogen atom. Examples of the monovalent substituent include an alkoxy group, an alkyl group, a carboxyl group, an acyl group and an aryl group. Further, as the halogen atoms, fluorine, chlorine, and bromine are preferably listed. Among these, the alkoxy group, which can lower the viscosity of the non-aqueous electrolytic solution, is particularly preferable. Further, as the alkoxy group, a methoxy group, an ethoxy group, a methoxyethoxy group, a propoxy group (isopropoxy group or n-propoxy group), a phenoxy group, and a trifluoroethoxy group are preferable. The methoxy group, the ethoxy group, the propoxy group (isopropoxy group or n-propoxy group), the phenoxy group, and the trifluoroethoxy group, which can lower the viscosity of the non-aqueous electrolytic solution, are more preferable. It is preferable that the monovalent substituent contains the aforementioned halogen atoms.

In formula (1), it is particularly preferable that n is 3 or 4 from a viewpoint of lowering the viscosity of the non-aqueous electrolytic solution.

As the phosphazene derivative, a structure in which R is a methoxy group and n is 3 in formula (1), a structure in which R is at least one of a methoxy group and a phenoxy group and n is 4 in formula (1), a structure in which R is an ethoxy group and n is 4 in formula (1), a structure in which R is an isopropoxy group and n is 3 or 4 in formula (1), a structure in which R is an n-propoxy group and n is 4 in formula (1), a structure in which R is a trifluoroethoxy group and n is 3 or 4 in formula (1), and a structure in which R is a phenoxy group and n is 3 or 4 in formula (1) are particularly preferable for lowering the viscosity of the non-aqueous electrolytic solution.

If respective substituents and n values are appropriately selected in formula (1), a non-aqueous electrolytic solution having more preferable viscosity and more suitable solubility for a mixture can be synthesized. These phosphazene derivatives can be used singly or in combination of two or more thereof.

As described above, it is preferable that molecular structure of the phosphazene derivative includes the substituent containing a halogen atom. As the halogen atom, fluorine, chlorine, and bromine are preferable, with fluorine being particularly preferable.

If the substituent including a halogen atom is contained in the molecular structure, even if the content of halogen atoms in the phosphazene derivatives is small, generation of a halogen gas from the halogen atom renders the non-aqueous electrolytic solution to more effectively exhibit self-extinguishability or flame-retardancy. The compounds having the substituent containing a halogen atom is sometimes associated with a problem of formation of halogen radicals. However, such a problem does not arise when using the phosphazene derivative because the phosphorus element in the molecular structure captures halogen radicals to form stable phosphorus halide.

A content of the halogen atom in the phosphazene derivative is preferably 2 to 80 wt%, more preferably 2 to 60 wt%, and particularly preferably 2 to 50 wt%.

If the content of a halogen atom in the phosphazene derivative is less than 2 wt%, effects exerted by the phosphazene derivative containing the halogen atom are not sufficient. On the contrary, when the content exceeds 80 wt%, the viscosity of the phosphazene derivative increases thus deteriorating the conductivity of the non-aqueous electrolytic solution.

--Flash Point--

Flash point of the phosphazene derivative is not particularly limited. However, from a viewpoint of suppressing combustibility or the like, the flash point of the phosphazene derivative is preferably 100°C or higher, and more preferably 150°C or higher.

If the flash point of the phosphazene derivative is 100°C or higher, combustion or the like can be suppressed. Further, even if combustion or the like occurs inside a cell, it becomes possible to minimize a danger in which the cell

combusts, and the flame spreads over the surface of the electrolytic solution.

The "flash point" specifically refers to a temperature at which flame spreads over the surface of substances and covers at least 75% thereof. The flash point can be a criterion to see a tendency at which a mixture that is combustible with air is formed. In the present invention, a value measured by a "Mini-flash" method described below was used. Namely, an apparatus (i.e., an automatic combustion measuring device, MINIFLASH manufactured by GRABNER INSTRUMENTS Inc.) comprising a small measuring chamber (4 ml), a heating cup, a flame, a combusting portion and an automatic flame sensing system was prepared in a sealed cup method. The heating cup was filled with a sample to be measured (1 ml). This was covered with a cover. The heating cup was heated from the upper portion of the cover. Thereafter, the temperature of the sample was elevated at a constant interval, a mixture of vapor and air in the cup was ignited at a constant interval of temperature, and combustion was detected. The temperature when combustion was detected was regarded as a flash point.

It is preferable that the additive for the non-aqueous electrolytic solution of the present invention is added to the non-aqueous electrolytic solution in an amount which is equal to a preferable range of the content of the phosphazene derivative incorporated in a non-aqueous electrolytic solution secondary cell or a non-aqueous electrolytic solution electric double layer capacitor, which will be described below. By controlling the addition amount of the additive of the present invention within the above specified range, effects such as self-extinguishability or flame-retardancy, resistance to deterioration, low viscosity, and long-term stability of the non-aqueous electrolytic solution can suitable be exerted.

As described above, by adding the additive for the non-aqueous electrolytic solution of the present invention described above to a non-aqueous electrolytic solution energy storage device, it is possible to produce a non-aqueous electrolytic solution energy storage device that can exhibit excellent self-extinguishability or flame retardancy, resistance to deterioration, low interface resistance of the non-aqueous electrolytic solution, excellent low-temperature characteristics, high conductivity due to the low internal resistance, and good long-term stability, while maintaining its essential electrical characteristics.

<<A non-aqueous electrolytic solution energy storage device>>

[Non-aqueous electrolytic solution secondary cells]

The non-aqueous electrolytic solution secondary cell of the present invention comprises an anode, a cathode, and a non-aqueous electrolytic solution, and other materials if necessary.

-Anodes-

Materials for anodes are not particularly limited, and can be appropriately selected from any known anode materials, and used. Preferable examples of anode materials include: metal oxides such as $V_2O_5$, $V_6O_{13}$, $MnO_2$, $MoO_3$, $LiCoO_2$, $LiNiO_2$, and $LiMn_2O_4$; metal sulfides such as $TiS_2$ and $MoS_2$; and conductive polymers such as polyaniline. Among these, $LiCoO_2$, $LiNiO_2$ and $LiMn_2O_4$ are preferable as active substances for anodes because they are safe, have high capacity, and are excellent in wettability with respect to electrolytic solutions. The material can be used alone or in combination of two or more thereof.

The configuration of the anodes is not particularly limited, and can preferably be selected from known configurations as electrodes, such as sheet, cylindrical, plate and spiral-shaped configurations.

-Cathodes-

Materials for cathodes are not particularly limited insofar as they can absorb and desorb lithium or lithium ions. The cathode can be selected appropriately from known cathode materials. For example, the materials containing lithium, such as lithium metal itself; lithium alloys containing lithium and aluminum, indium, lead or zinc; and a carbon material, e.g., lithium-doped graphite are preferable. Of these materials, a carbon material such as graphite is preferable from the viewpoint of high safety. These materials can be used alone or in combination of two or more thereof.

The configuration of a cathode is not particularly limited, and can appropriately be selected from known configurations in the same manner as those of the anodes described above.

-Non-aqueous electrolytic solution-

A non-aqueous electrolytic solution contains the additive for the non-aqueous electrolytic solution of the present invention and a supporting salt, and other components if necessary.

--Supporting Salt--

As the supporting salt, ion sources of lithium ions are preferable. Ion sources of the lithium ions such as $LiClO_4$, $LiBF_4$, $LiPF_6$, $LiCF_3SO_3$, $LiAsF_6$, $LiC_4F_9SO_3$, $Li(CF_3SO_2)_2N$, and $Li(C_2F_5SO_2)_2N$ can preferably be used. These can be used singly or in combination of two or more thereof.

An addition amount of the supporting salt to 1 kg of the non-aqueous electrolytic solution (solvent constituent) is preferably 0.2 to 1 mol, and more preferably 0.5 to 1 mol.

If the amount of the supporting salt added to the non-aqueous electrolytic solution is less than 0.2 mol, sufficient conductivity of the non-aqueous electrolytic solution cannot be secured, occasionally posing a problem of impaired charging/discharging characteristics of cells. Meanwhile, if the amount exceeds 1 mol, the viscosity of the non-aqueous electrolytic solutions increases, whereby sufficient mobility of the lithium ion or the like cannot be secured. Consequently, sufficient conductivity of the non-aqueous electrolytic solutions cannot be secured as described above, thus damaging the charging/discharging characteristics of the cell.

--Additive for a non-aqueous electrolytic solution secondary cell--

An additive for a non-aqueous electrolytic solution secondary cell is the same as the additive used for the non-aqueous electrolytic solution of the present invention as described in the foregoing paragraph, and contains the phosphazene derivative.

--Viscosity--

The viscosity of a non-aqueous electrolytic solution at 25°C is preferably 10mPa·s (10cP) or less, and more preferably 5mPa·s (5cP) or less.

If the viscosity of the non-aqueous electrolytic solution is 10mPa·s (10cP) or less, a non-aqueous electrolytic solution secondary cell has excellent cell properties such as low internal resistance, high conductivity and the like.

The viscosity was measured employing rotational speeds of 1rpm, 2rpm, 3rpm, 5rpm, 7rpm, 10rpm, 20rpm and 50rpm, each for 120 minutes, using a viscometer (product name: R-type viscometer Model RE500-SL, manufactured by Toki Sangyo K.K.), and the value obtained with a rotational speed at which the indicated value reached 50 to 60% as an analysis condition was adopted.

--Conductivity--

The conductivity of the non-aqueous electrolytic solution can be adjusted to a preferable range of values by controlling the viscosity of the non-aqueous electrolytic solution. In a case of a solution in which lithium salt is dissolved at the concentration of 0.75 mol/l, the conductivity is preferably 2.0mS/cm or more, and more preferably 5.0 mS/cm or more.

If the conductivity is 2.0mS/cm or more, sufficient conductivity of the non-aqueous electrolytic solution can be secured, thus making it possible to suppress internal resistance of the non-aqueous electrolytic solution secondary cell, and also control ascent/descent of potentials during charging/discharging thereof.

The conductivity is a value obtained by a measuring method described below. Namely, the conductivity is measured under predetermined conditions (temperature: 25°C, pressure: normal pressure, and moisture percentage: 10ppm or less) using a conductivity meter (CDM210 type manufactured by Radio Meter Trading Co., Ltd.), while applying a constant current of 5mA to the non-aqueous electrolytic solution secondary cell.

As to the conductivity, theoretically, a conductance (Gm) of a non-aqueous electrolytic solution is first calculated. From this value, influence by a cable resistance (R) is subtracted to determine a conductance (G) of the electrolytic solution itself. Accordingly, a conductance K=G·K (S/cm) can be determined from the obtained value (G) and the cell constant (K) already known.

--Content--

Depending on the effects produced by incorporating the phosphazene derivative in the non-aqueous electrolytic solution, a content of the phosphazene derivative in the non-aqueous electrolytic solution is divided into four types of contents: a first content by which the viscosity of the non-aqueous electrolytic solution can be lowered; a second content in which "self-extinguishability" can suitably be imparted to the non-aqueous electrolytic solution; a third content in which "flame retardancy" can suitably be imparted to the non-aqueous electrolytic solution; and a fourth content in which "resistance to deterioration" can suitably be imparted to the non-aqueous electrolytic solution.

From the viewpoint of lowering the viscosity of the non-aqueous electrolytic solution, the first content of the

phosphazene derivative in the non-aqueous electrolytic solution is preferably 40 wt% or less, more preferably 35 wt% or less, and most preferably 30 wt% or less.

When the first content exceeds 40 wt%, there arises a case where the viscosity of the non-aqueous electrolytic solution is insufficiently low, which is not preferable from viewpoints of internal resistance and conductivity.

From the viewpoint of "self-extinguishability", the second content of the phosphazene derivative in the non-aqueous electrolytic solution is preferably 20 wt % or more. In order to exert both self-extinguishability and lowering of viscosity of the non-aqueous electrolytic solution considerably, the second content is preferably 20 to 40 wt%, and more preferably 20 to 35 wt%, and particularly preferably 20 to 30 wt%.

If the second content is less than 20 wt%, there arises a case where the non-aqueous electrolytic solution cannot exert sufficient "self-extinguishability".

"Self-extinguishability" means characteristics in which combusted flame extinguishes at a 25 to 100 mm-height of flame line and progresses to a state in which no fallen substances combust.

From the viewpoint of "flame retardancy", the third content of the phosphazene derivative in the non-aqueous electrolytic solution is preferably 30 wt% or more, and from the viewpoint of accomplishing both flame retardancy and lowering of the viscosity of the non-aqueous electrolytic solution greatly, the content is preferably 30 to 40 wt%, and more preferably 30 to 35 wt%.

When the third content is 30 wt% or more, the non-aqueous electrolytic solution can exert sufficient "flame retardancy".

Further, in an evaluation method of "flame retardancy" described below, "flame retardancy" means characteristics that the ignited flame does not reach a 25 mm-height of flame line and progresses to a state in which no fallen substances combust.

The self-extinguishability and flame retardancy are assessed according to a method in which a UL94HB method of UL (Under Lighting Laboratory) standards was modified. In more detail, the self-extinguishability and flame retardancy were evaluated by measuring a combustion behavior of flame ignited under an ambient air, more specifically, on the basis of UL test standards, such that various types of electrolytic solutions (1.0 ml) were immersed in an incombustible quartz fiber and test pieces (127mm× 12.7mm) were prepared, and then combustion, flammability, and formation of carbide, and phenomenon during a secondary ignition were observed.

From the viewpoint of "self-extinguishability or flame retardancy", a non-aqueous electrolytic solution containing the phosphazene derivative, $LiPF_6$, ethylene carbonate and/or propylene carbonate, and a non-aqueous electrolytic solution containing the phosphazene derivative, $LiCF_3SO_3$ and propylene carbonate are particularly preferable. In case of these non-aqueous electrolytic solutions, even if the content of the phosphazene derivative in the non-aqueous electrolytic solution is small, the non-aqueous electrolytic solution provides effects of excellent self-extinguishability or flame retardancy. Namely, the content of the phosphazene derivative in the non-aqueous electrolytic solution is preferably 2 to 5 wt% in order to provide self-extinguishability, and the content is preferably 5 wt% or more in order to provide flame retardancy. Further, in order for the non-aqueous electrolytic solution to exert both flame retardancy and lowering of viscosity of the non-aqueous electrolytic solution remarkably, the content is preferably between 5 wt % and 40 wt%, more preferably between 5 wt % and 35 wt%, and particularly preferably between 5 wt % and 30 wt%. From the viewpoint of "resistance to deterioration", the fourth content of the phosphazene derivative in the non-aqueous electrolytic solution is preferably 2 wt% or more, and more preferably 2 to 20 wt %.

If the fourth content is within the above range, deterioration can suitably be suppressed.

The "deterioration" refers to a decomposition of the supporting salt (e.g., lithium salt), and effects caused by the prevention of deterioration were evaluated by an evaluation method of stability described below.

(1) First, the non-aqueous electrolytic solution containing the supporting salt is prepared and measured for its moisture content. Then, the concentration of a hydrogen fluoride present in the non-aqueous electrolytic solution is determined by a high performance liquid chromatography (ion chromatography). Further, color hues of the non-aqueous electrolytic solution are visually observed. Thereafter, the charging/discharging capacity (mAh/g) is calculated by a charging/discharging test.

(2) The non-aqueous electrolytic solution is left in a gloved box for 2 months. Thereafter, the moisture content and the concentration of a hydrogen fluoride are measured again, color hues are observed, and the charging/discharging capacity (mAh/g) is calculated. On the basis of variations of obtained values, stability of the non-aqueous electrolytic solution is evaluated.

-Other Components-

As other components, an aprotic organic solvent and the like are particularly preferable in view of safety.

If an aprotic organic solvent is contained in the non-aqueous electrolytic solution, the aprotic organic solvent does not cause a reaction with the above-described cathode material. Accordingly, high safety can be ensured, and

viscosity of the non-aqueous electrolytic solution can be lowered, whereby the most preferable ionic conductivity for the non-aqueous electrolytic solution secondary cell can readily be achieved.

The aprotic organic solvents are not particularly limited. However, from the viewpoint of lowering of viscosity of the non-aqueous electrolytic solution, ether compounds and ester compounds can be used. Specific examples thereof include: 1,2-dimethoxyethane, tetrahydrofuran, dimethyl carbonate, diethyl carbonate, diphenyl carbonate, ethylene carbonate, propylene carbonate, γ-butyrolactone, γ-valerolactone, and methylethyl carbonate.

Among these, cyclic ester compounds such as ethylene carbonate, propylene carbonate and γ-butyrolactone, and chain ester compounds such as 1,2-dimethoxyethane, dimethyl carbonate, ethylmethyl carbonate and diethyl carbonate are preferable. The cyclic ester compounds are particularly preferable in that they have high relative dielectric constants and excellent ability to dissolve lithium salts or the like. The chain ester compounds are preferable because they have a low viscosity and can lower the viscosity of the non-aqueous electrolytic solution. These can be used singly, but use of two or more thereof in combination is preferable.

--Viscosity of an aprotic organic solvent--

The viscosity of the aprotic organic solvent at 25°C is preferably 10mPa·s (10cP) or less, and more preferably 5mPa·s (5cP) or less in order to lower the viscosity of the non-aqueous electrolytic solution.

-Other Members-

As other members, a separator that is arranged between the cathode and the anode in order to prevent a short circuit of electric currents when both the cathode and the anode contact to each other, and known members usually employed in cells are preferably used.

As the materials for separators, it is preferable to use materials by which both electrodes can reliably be prevented from contacting each other and which permits inclusion or passage of electrolytic solutions. Examples of the materials include: synthetic resin non-woven fabrics such as polytetrafluoroethylene, polypropylene and polyethylene, thin layer films, and the like. Among these, use of a micro-porous polypropylene or polyethylene film having a thickness of from about 20 to 50 μm is particularly preferable.

<Internal resistance of a non-aqueous electrolytic solution secondary cell>

Internal resistance (Ω) of the non-aqueous electrolytic solution secondary cell can be adjusted to a preferable range of values by controlling the viscosity of the non-aqueous electrolytic solution within the above specified preferable range. The internal resistance (Ω) is preferably 0.1 to 0.3 (Ω), and more preferably 0.1 to 0.25 (Ω).

The internal resistance can be obtained by a known method for measuring an internal resistance to be described below. In more detail, the non-aqueous electrolytic solution secondary cell is produced, a charging/discharging curve is prepared and a deflection width of potentials in accordance with charging rest or discharging rest is measured to thereby obtain the internal resistance.

<Capacity of a non-aqueous electrolytic solution secondary cell>

The capacity of a non-aqueous electrolytic solution secondary cell, when using $LiCoO_2$ as the cathode, is preferably 140 to 145 (mAh/g), and more preferably 143 to 145 (mAh/g), as a charging/discharging capacity (mAh/g).

Incidentally, the charging/discharging capacity is measured according to a conventional charging/discharging test using a semi-open type cell or a closed type coin cell (See Masayuki Yoshio, *"Lithium ion secondary cell"* published by Nikkan Kogyo Shinbun-sha) to find a charging current (mA), time (t) and the weight of an electrode material (g).

<Shape of a non-aqueous electrolytic solution secondary cell>

The shape of a non-aqueous electrolytic solution secondary cell is not particularly limited, and is suitably formed into various known shapes such as a coin-type cell, a button-type cell, a paper-type cell, a square-type cell and a cylindrical cell having a spiral structure.

In the case of the spiral structure, a sheet type anode is prepared to sandwich a collector, and a (sheet type) cathode is layered and wound, to thereby produce a non-aqueous electrolytic solution secondary cell.

<Performance of a non-aqueous electrolytic solution secondary cell>

The non-aqueous electrolytic solution secondary cell of the present invention exhibits excellent self-extinguishability or flame retardancy, good resistance to deterioration, low interface resistance of the non-aqueous electrolytic solution, excellent low-temperature characteristics, low internal resistance and hence providing high conductivity, and excellent long-term stability.

[Non-aqueous electrolytic solution electric double layer capacitor]

The non-aqueous electrolytic solution electric double layer capacitor of the present invention comprises an anode, a cathode, a non-aqueous electrolytic solution, and other materials if necessary.

--Anodes--

Materials for anodes of non-aqueous electrolytic solution electric double layer capacitors are not particularly limited. However, use of carbon based-polarizable electrodes is generally preferable. As the polarizable electrodes, it is preferable to use electrodes whose specific surface and/or bulk density are large, which are electro-chemically inactive, and which have a low resistance.

The polarizable electrodes are not particularly limited. However, the polarizable electrodes generally contain activated carbons, and other components such as conductive agents or binders as necessary.

-Activated Carbons-

Raw materials for activated carbons are not particularly limited, and usually contain other components such as phenol resins, various types of heat-resistant resins, and pitches.

Preferable examples of the heat-resistant resins include: polyimide, polyamide, polyamideimide, polyetherimide, polyethersarsafone, polyetherketone, bismaleimidetriazine, aramide, fluororesin, polyphenylene, polyphenylene sulfide, and the like. These can be used singly or in combination of two or more thereof.

It is preferable that activated carbons used for the anodes are formed into a powder, fibers, and the like in order to increase the specific surface area of the electrode and increase the charging capacity of the non-aqueous electrolytic solution electric double layer capacitor.

Further, these activated carbons may be subjected to a heat treatment, a drawing treatment, a vacuum treatment at a high temperature, and a rolling treatment for the purpose of increasing the charging capacity of the non-aqueous electrolytic solution electric double layer capacitor.

--Other Components (conductive agents and binders)--

The conductive agents are not particularly limited, but graphite, acetylene black and the like can be used.

Materials for the binder are not particularly limited, but resins such as polyvinylidene fluoride and tetrafluoroethylene can be used.

-Cathodes-

As the cathode, polarizable electrodes which are the same as those for the anode can be used.

--Non-aqueous electrolytic solution--

The non-aqueous electrolytic solution contains the additive for the non-aqueous electrolytic solution of the present invention, a supporting salt, and other components if necessary.

--Supporting Salt--

The supporting salt can be selected from those that are conventionally known. A quaternary ammonium salt is preferable because it provides excellent electric characteristics such as electric conductivity and the like in the non-aqueous electrolytic solution.

The quaternary ammonium salt is required to form a multivalent ion, in that the quaternary ammonium salt is a solute which acts as an ion source for forming an electric double layer capacitor and can effectively improve electric characteristics such as electric conductivity of the non-aqueous electrolytic solution.

Examples of the quaternary ammonium salts include:
$(CH_3)_4N \cdot BF_4$, $(CH_3)_3C_2H_5N \cdot BF_4$, $(CH_3)_2(C_2H_5)_2N \cdot BF_4$, $CH_3(C_2H_5)_3N \cdot BF_4$, $(C_2H_5)_4N \cdot BF_4$, $(C_3H_7)_4N \cdot BF_4$, $CH_3(C_4H_9)_3N \cdot BF_4$, $(C_4H_9)_4N \cdot BF_4$, $(C_6H_{13})_4N \cdot BF_4$, $(C_2H_5)_4N \cdot ClO_4$, $(C_2H_5)_4N \cdot BF_4$, $(C_2H_5)_4N \cdot PF_6$, $(C_2H_5)_4N \cdot AsF_6$,

$(C_2H_5)_4N \cdot SbF_6$, $(C_2H_5)_4N \cdot CF_3SO_3$, $(C_2H_5)_4N \cdot C_4F_9SO_3$, $(C_2H_5)_4N \cdot (CF_3SO_2)_2N$, $(C_2H_5)_4N \cdot BCH_3 (C_2H_5)_3$, $(C_2H_5)_4N \cdot B (C_2H_5)_4$, $(C_2H_5)_4N \cdot B (C_4H_9)_4$, $(C_2H_5)_4N \cdot B (C_6H_5)_4$ and the like. Further, a hexafluorophosphate of the quaternary ammonium salt may be used. Moreover, solubility can be improved by increasing polarizability. Therefore, a quaternary ammonium salt in which different alkyl groups are bonded to an N atom can be used.

Examples of the quaternary ammonium salt include compounds represented by the following structural formulae (1) to (10):

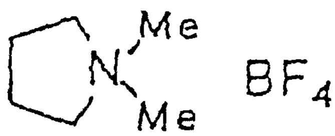

Structural formula (1)

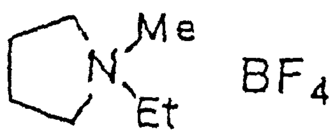

Structural formula (2)

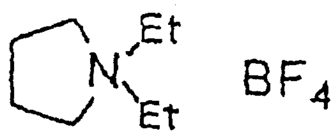

Structural formula (3)

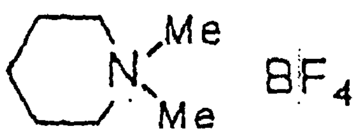

Structural formula (4)

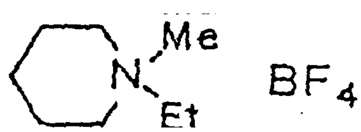

Structural formula (5)

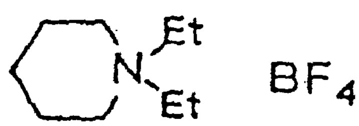

Structural formula (6)

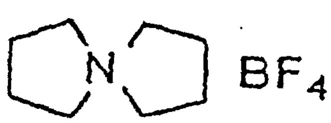

Structural formula (7)

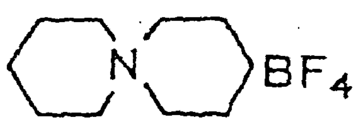

Structural formula (8)

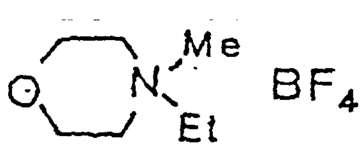

Structural formula (9)

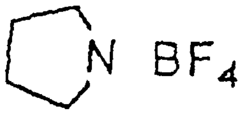 . Structural formula (10)

In the above-described structural formulae, Me represents a methyl group and Et represents an ethyl group.

Among these quaternary ammonium salts, salts capable of generating $(CH_3)_4N^+$ or $(C_2H_5)_4N^+$ as the positive ion are preferable in order to secure high electric conductivity. Also, salts capable of generating the negative ion whose format quantity is small are preferable.

These quaternary ammonium salts can be used singly or in combination of two or more thereof.

The amount of the supporting salt added to 1kg of the non-aqueous electrolytic solution (solvent constituent) is preferably 0.2 to 1.5 mol, and more preferably 0.5 to 1.0 mol.

If the addition amount of the supporting salt is less than 0.2 mol, there arises a case where electric characteristics such as the electric conductivity of the non-aqueous electrolytic solution must be sufficiently secured. On the other hand, if the addition amount exceeds 1.5 mol, there arises a case where the viscosity of the non-aqueous electrolytic solution increases and electric characteristics such as electric conductivity deteriorate.

-Additive for a non-aqueous electrolytic solution electric double layer capacitor-

The additive for a non-aqueous electrolytic solution electric double layer capacitor is the same as that described in the paragraph of "An additive for a non-aqueous electrolytic solution" of the present invention, and contains the phosphazene derivative described above.

--Viscosity--

The viscosity of the non-aqueous electrolytic solution at 25°C is preferably 10mPa·s (10cP) or less, and more preferably 5mPa·s (5cP) or less.

If the viscosity is 10mPa·s (10cP) or less, a non-aqueous electrolytic solution electric double layer capacitor can exhibit excellent cell characteristics such as low internal resistance and high conductivity. Incidentally, the method for measuring the viscosity is the same as that described in the paragraph of "Viscosity" of the non-aqueous electrolytic solution in the non-aqueous electrolytic solution secondary cell.

--Conductivity--

The conductivity of the non-aqueous electrolytic solution can be adjusted to have a preferable value by controlling the viscosity of the non-aqueous electrolytic solution within the above specified preferable range. The conductivity of the non-aqueous electrolytic solution (i.e., as the conductivity of a quaternary ammonium salt solution: 0.5 mol/l) is preferably 2.0 mS/cm or more, and more preferably 5.0 to 30 mS/cm or more.

If the conductivity is 2.0mS/cm or more, sufficient conductivity of the non-aqueous electrolytic solution can be secured, internal resistance of the non-aqueous electrolytic solution double layer capacitor can be suppressed, and ascent/descent of potentials during charging/discharging can be suppressed. Further, the method for measuring the conductivity is the same as that described in the paragraph of "Conductivity" of the non-aqueous electrolytic solution in the non-aqueous electrolytic solution secondary cell.

--Content—

The content is the same as that described in the paragraph of the "Content" of the non-aqueous electrolytic solution in the non-aqueous electrolytic solution secondary cell. It should be noted that in order to evaluate the effects produced by preventing deterioration, the charging/discharging capacity (mAh/g) is calculated in the secondary cell, whereas the internal resistance (Ω) is calculated in the electric double layer capacitor.

--Other Components--

In the same manner as that described in the paragraph of the "Other components" of the non-aqueous electrolytic solution in the non-aqueous electrolytic solution secondary cell, use of an aprotic organic solvent is preferable. When the aprotic organic solvent is contained in the non-aqueous electrolytic solution, the non-aqueous electrolytic solution acquires lowered viscosity and improved electric conductivity.

--Viscosity of an aprotic organic solvent--

The viscosity of an aprotic organic solvent is the same as that described in the foregoing paragraph of the "Viscosity of an aprotic organic solvent" in the non-aqueous electrolytic solution in the non-aqueous electrolytic solution secondary cell.

--Other Members--

As other members, a separator, a collector or a container can be used.
The separator is arranged between the anode and the cathode in order to prevent a short circuit of the non-aqueous electrolytic solution electric double layer capacitor. The separators are not particularly limited, and known separators ordinarily used as the separators for the non-aqueous electrolytic solution electric double layer capacitor are suitably used.
In the same manner as separators used in the secondary cell, micro porous film, nonwoven fabrics and paper are prefearbly used. Specific examples of the material for the separator include non-woven fabrics of synthetic resins such as polytetrafluoroethylene, polypropylene and polyethylene, thin layer films, and the like. Among these, use of a micro-porous polypropylene or polyethylene film having a thickness of from about 20 to 50 μm is particularly preferable.
The collectors are not particularly limited, and known materials ordinarily used for non-aqueous electrolytic solution electric double layer capacitors are preferably used. Collector materials which have excellent resistance to electrochemical corrosion and chemical corrosion, good workabilty and mechanical strength, and which can be manufactured inexpensively are preferably used. Suitable examples thereof include aluminum, stainless steel, conductive resins, and the like.
The containers are not particularly limited, and known containers employed for the non-aqueous electrolytic solution electric double layer capacitors are preferably used.
Materials such as aluminum, stainless steel, conductive resin and the like are preferably used for the containers.
As other members than the separator, collectors and containers, conventionally known members which are ordinarily used for non-aqueous electrolytic solution electric double layer capacitors are preferably used.

<Internal resistance of a non-aqueous electrolytic solution electric double layer capacitor>

An internal resistance (Ω) of the non-aqueous electrolytic solution electric double layer capacitor is preferably 0.1 to 0.3 (Ω), and more preferably 0.1 to 0.25 (Ω).
The internal resistance can be obtained by a known method for measuring an internal resistance, for example, the method described below. In more detail, the non-aqueous electrolytic solution electric double layer capacitor is produced, a charging/discharging curve is prepared, and a deflection width of potentials in association with charging rest or discharging rest is measured to thereby obtain the internal resistance.

<Shape and use of a non-aqueous electrolytic solution electric double layer capacitor>

The shape of the non-aqueous electrolytic solution electric double layer capacitors are not particularly limited, and the capacitors are preferably formed into known shapes such as cylinder-type (cylindrical or square) or flat-type (coin).
The non-aqueous electrolytic solution electric double layer capacitors are preferably used for memory backups of various electronic devices, industrial apparatus, and aeronautical apparatus; electric magnetic holders for toys, cordless apparatus, gas apparatus, and instant boilers; and power supplies for clocks such as a wrist watch, a wall clock, a solar clock, and an AGS (automatic gain stabilization) wrist watch.

<Performance of a non-aqueous electrolytic solution electric double layer capacitor>

The non-aqueous electrolytic solution electric double layer capacitor of the present invention has excellent self-extinguishability or flame retardancy and resistance to deterioration, has low interface resistance of the non-aqueous electrolytic solution, has excellent low-temperature characteristics, has low internal resistance and hence providing higher conductivity, and has excellent long-term stability.

EXAMPLES

With reference to Examples and Comparative Examples, a more detailed description of the present invention

will be given hereinafter. The present invention is not limited to Examples described below:

<<Non-aqueous electrolytic solution secondary cell>>

Example 1:

[Preparation of a non-aqueous electrolytic solution]

20g (20 wt%) of a phosphazene derivative (a cyclic phosphazene derivative represented by formula (1) shown above, in which R is a methoxy group and n is 3)(an additive for a non-aqueous electrolytic solution) was added to 80 ml of a mixed solvent of diethyl carbonate and ethylene carbonate (mixing ratio by volume: diethyl carbonate/ethylene carbonate=1/1) (aprotic organic solvent). Further, $LiPF_6$ (supporting salt) was dissolved at a concentration of 0.75 mol/kg in this mixture, to prepare a non-aqueous electrolytic solution (viscosity at 25°C: 8.2 mPa·s (8.2 cP), conductivity of a 0.75 mol/l lithium salt solution: 6.5mS/cm).

The viscosity and conductivity of the non-aqueous electrolytic solution were measured, respectively, by the measuring methods described above.

<Evaluation of self-extinguishability and flame retardancy>

The obtained non-aqueous electrolytic solution was evaluated for self-extinguishability and flame retardancy in the same manner as above, which will be described below. The results are shown in Table 1.

<Evaluation of flame retardancy>

In the case where combusted flame did not reach a height of 25 mm in a device, and things dropped from a net did not combust, the electrolytic solution was rated to have flame retardancy.

<Evaluation of self-extinguishability>

In the case where combusted flame was extinguished between the heights of 25 mm and 100 mm, and things dropped from a net did not combust, the electrolytic solution was rated to have self-extinguishability.

<Evaluation of combustibility>

In the case where combusted flame exceeded a height of 100 mm, the electrolytic solution was rated to have combustibility.

<Evaluation of deterioration>

Deterioration of the obtained non-aqueous electrolytic solution was evaluated in the same manner as above for stability, by measuring and calculating moisture percentage (ppm), concentration of hydrogen fluoride (ppm), and charging/discharging capacity (mAh/g) of the non-aqueous electrolytic solution, that was obtained immediately after the non-aqueous electrolytic solution was prepared and after the non-aqueous electrolytic solution was left in a gloved box for two months. At this time, the charging/discharging capacity (mAh/g) was determined by preparing a charging/discharging curve using an anode or a cathode whose weight has already been known, and dividing the resulting value by the weight of electrodes used for obtaining charging/discharging amounts as described above. Further, a change in color hues of the non-aqueous electrolytic solution obtained immediately after the non-aqueous electrolytic solution was prepared and after the non-aqueous electrolytic solution was left in the gloved box for two months was visually observed. The results are shown in Table 1.

[Production of a non-aqueous electrolytic solution secondary cell]

A cobalt oxide having chemical formula $LiCoO_2$ was used as an anode active substance. 10 parts of acetylene black (conductive auxiliary) and 10 parts of Teflon (registered trade mark) binder (binder resin) were added to 100 parts of $LiCoO_2$. Then an organic solvent (a mixture of ethyl acetate/ ethanol in a ratio of 50/50 wt%) was added thereto and kneaded. The resultant product was press-rolled to form a thin anode sheet (thickness: 100μm and width: 40 mm).

Thereafter, an aluminum foil (collector) coated with a conductive adhesive at both surfaces and having a thickness of 25 μm, was sandwiched between the two anode sheets obtained above. A separator (a micro-porous

polypropylene film) having a thickness of 25 µm was arranged, and a lithium metal foil having a thickness of 150 was layered thereon, and the resultant layered product was wound to produce a cylindrical electrode. The thus produced cylindrical electrode had an anode length of about 260mm.

The non-aqueous electrolytic solution was supplied to the cylindrical electrode and then sealed to thereby form a size AA lithium cell.

<Measurement and evaluation of cell properties >

After the cell obtained above were measured and evaluated for the initial properties (voltages and internal resistances) at 20°C, charging/discharging cycle performances were measured and evaluated by an evaluation method to be described below. The results are shown in Table 1.

<<Evaluation of charging/discharging cycle performance>>

Charging/discharging was repeated until 50 cycles, to provide a maximum voltage of 4.5V, a minimum voltage of 3.0V, a discharging current of 100mA and a charging current of 50mA. A charging/discharging capacity at this time was compared with that at the initial stage of charging/discharging, and a capacity reduction ratio after charging/discharging repetition of 50 times was calculated. Similarly, a total of three cells were measured and calculated to determine a mean value, and the charging/discharging cycle performance was evaluated.

<Evaluation of low-temperature characteristics (measurement of discharging capacity at low temperature)>

The obtained cells was subjected to repetition of charging/discharging of 50 cycles under the same conditions as the "Evaluation of charging/discharging cycle performance", except that discharging was conducted at low temperatures (0°C and -10°C). A discharging capacity at such low temperatures at this time was compared to that measured at 20°C to thereby calculate a discharging capacity reduction ratio using the following equation (2). Similarly, the discharging capacity reduction ratios of a total of three cells were measured and calculated, whereby a mean value was determined to evaluate discharging characteristics at low temperatures. The results are shown in Table 1.

Equation (2):

$$\text{Discharging capacity reduction ratio} =$$

$$\text{discharging capacity at low temperature/discharging capacity at } (20^\circ C) \times 100\ (\%)$$

Example 2:

A non-aqueous electrolytic solution (viscosity at 25°C: 9.7 mPa· s (9.7 cP), conductivity of a 0.75 mol/l lithium salt solution: 5.8mS/cm) was prepared in the same manner as in Example 1, except that the amount of the mixed solvent of diethyl carbonate and ethylene carbonate was changed to 70 g and the amount of the phosphazene derivative was changed to 30 g (30 wt%) in the "Preparation of a non-aqueous electrolytic solution" of Example 1, and evaluated for self-extinguishability or flame retardancy, and resistance to deterioration. Further, a non-aqueous electrolytic solution secondary cell was produced in the same manner as in Example 1, and then initial cell characteristics (voltages and internal resistances), charging/discharging cycle performance, and low-temperature characteristics were respectively measured and evaluated. The results are shown in Table 1.

Example 3:

A non-aqueous electrolytic solution (viscosity at 25°C: 3.7 mPa· s (3.7 cP), conductivity of a 0.75 mol/l lithium salt solution: 7.4 mS/cm) was prepared in the same manner as in Example 1, except that the amount of the mixed solvent of diethyl carbonate and ethylene carbonate was changed to 94.5 g, the amount of the phosphazene derivative was changed to 5.5 g (5.5 wt%), and the supporting salt was replaced by $LiPF_6$ in the "Preparation of a non-aqueous electrolytic solution" of Example 1, and evaluated for self-extinguishability or flame retardancy, and resistance to deterioration. Further, a non-aqueous electrolytic solution secondary cell was produced in the same manner as in Example 1, and then initial cell characteristics (voltages and internal resistances), charging/discharging cycle performance and

low-temperature characteristics were respectively measured and evaluated. The results are shown in Table 1.

Example 4:

A non-aqueous electrolytic solution (viscosity at 25°C: 3.6 mPa· s (3.6 cP), conductivity of a 0.75 mol/l lithium salt solution: 7.7 mS/cm) was prepared in the same manner as in Example 1, except that the amount of the mixed solvent of diethyl carbonate and ethylene carbonate was changed to 97 g, the amount of the phosphazene derivative was changed to 3 g (3 wt%), and the supporting salt was replaced by $LiPF_6$ in the "Preparation of a non-aqueous electrolytic solution" of Example 1, and evaluated for self-extinguishability or flame retardancy, and resistance to deterioration. Further, a non-aqueous electrolytic solution secondary cell was produced in the same manner as in Example 1, and then initial cell characteristics (voltages and internal resistances), charging/discharging cycle performance and low-temperature characteristics were respectively measured and evaluated. The results are shown in Table 1.

Comparative Example 1:

A non-aqueous electrolytic solution (viscosity at 25°C: 25.2 mPa· s (25.2 cP), conductivity of 0.75 mol/l of lithium salt solution: 1.2 mS/cm) was prepared in the same manner as in Example 1, except that the phosphazene derivative was replaced by a phosphazene derivative represented by the following structural formula (11) (liquid at ordinary temperature of 25°C), the amount of the mixed solvent of diethyl carbonate and ethylene carbonate was changed to 70 g, and the amount of the phosphazene derivative was changed to 30 g (30 wt%) in the "Preparation of a non-aqueous electrolytic solution" of Example 1, and assessed for self-extinguishability or flame retardancy, and resistance to deterioration. Further, a non-aqueous electrolytic solution secondary cell was produced in the same manner as in Example 1, whereby initial cell characteristics (voltages and then internal resistances), charging/discharging cycle performance, and low-temperature characteristics were respectively measured and evaluated. The results are shown in Table 1.

Structural formula (11) $(PN(OC_6H_5)_2)_8$

Table 1

| EXAMPLES | Immediately after preparation of electrolytic solution (Evaluation of deterioration) | | | After left for 2 months ( in gloved box) (Evaluation of deterioration) | | | Change of hues | Evaluation of deterioration | Cell properties (charging/ Discharging capacity (mAh/g)) | | Evaluation of low-temperature characteristics (discharging capacity reduction ratio(%) after 50 cycles) | | Cell properties (initial internal resistance (Ω)) | Cell properties (initial voltage) | Self-extinguishability or Flame retardancy | Viscosity of non-aqueous electrolytic solution (mPa·s(cP)) | Viscosity of non-aqueous electrolytic solution (before adding supporting salt) (mPa·s(cP)) | Conductivity of non-aqueous electrolytic solution (mS/cm) |
|---|---|---|---|---|---|---|---|---|---|---|---|---|---|---|---|---|---|---|
| | Charging/discharging capacity (mAh/g) | HF density (ppm) | Moisture percentage (ppm) | Charging/discharging capacity (mAh/g) | HF density (ppm) | Moisture percentage (ppm) | | | After initial charging/discharging | After charging/ Discharging in 20 cycles | 0°C during discharging | -10°C during discharging | | | | | | |
| Example 1 | 145 | below 1 | 2 | 144 | below 1 | 2 | No | very stable | 145 | 143 | 90 | 50 | 0.14 | 2.7 | self-extinguish ability | 8.2 | 7.5 | 6.5 |
| Example 2 | 143 | below 1 | 2 | 143 | below 1 | 2 | No | stable | 144 | 143 | 90 | 50 | 0.15 | 2.7 | flame retardancy | 9.7 | 8.2 | 5.8 |
| Example 3 | 145 | 2 | 3 | 145 | 2 | 3 | No | very stable | 143 | 142 | 93 | 50 | 0.1 | 2.6 | flame retardancy | 3.7 | 2.2 | 7.4 |
| Example 4 | 146 | 2 | 2 | 145 | 2 | 2 | No | stable | 147 | 145 | 92 | 50 | 0.1 | 2.6 | self-extinguish ability | 3.6 | 2.1 | 7.7 |
| Com. Example 1 | 125 | below 1 | 2 | 121 | below 1 | 3 | no | sable | 126 | 109 | 40 | 20 | 0.22 | 2.9 | flame retardancy | 25.2 | 18.6 | 1.2 |

As seen from the results shown in Table 1, although a phosphazene derivative used in the non-aqueous electrolytic solution of Comparative Example 1 is stable in the property of deterioration, the non-aqueous electrolytic solutions of Examples 1 to 4 are more excellent than the non-aqueous electrolytic solution of Comparative Example 1 in the properties of low-temperature characteristics, viscosity and conductivity. These results reveal that since the viscosity of the non-aqueous electrolytic solution is low, a non-aqueous electrolytic solution secondary cell exhibiting low internal resistance and excellent conductivity can be produced.

<<Non-aqueous electrolytic solution double layer capacitor>>

Example 5:

[Preparation of a non-aqueous electrolytic solution]

20g (20 wt%) of a phosphazene derivative (a cyclic phosphazene derivative represented by formula (1), in which R is a methoxy group and n is 3)(an additive for a non-aqueous electrolytic solution) was added to 80 g of propylene carbonate (aprotic organic solvent). Further, tetraethyl ammonium fluoroborate $(C_2H_5)_4N{\cdot}BF_4$ (supporting salt) was dissolved at the concentration of 1 mol/kg in this mixture to thereby prepare a non-aqueous electrolytic solution (viscosity at 25°C: 7.6 mPa·s (7.6 cP)).

The viscosity and the conductivity of the non-aqueous electrolytic solution were measured, respectively, by the measuring method described above.

<Evaluation of self-extinguishability, flame retardancy and resistance to deterioration>

Self-extinguishability, flame retardancy and resistance to deterioration of the obtained non-aqueous electrolytic solution were evaluated in the same manner as conducted for the non-aqueous electrolytic solution secondary cell. It should be noted here that in order to evaluate resistance to deterioration, the non-aqueous electrolytic solution secondary cell was measured for charging/discharging capacity (mAh/g), whereas the non-aqueous electrolytic solution electric double layer capacitor was assessed for internal resistance (Ω). The results are shown in Table 2.

[Preparation of anodes and cathodes (polarizable electrolytic solutions)]

Activated carbon (Kuractive-1500 manufactured by Kuraray Chemical Co., Ltd), acetylene black (conductive agent) and tetrafluoroethylene (PTFE) (binder) were mixed in a mass ratio of activated carbon/acetylene black/PTFE of 8/1/1 to obtain a mixture.

100 mg of the obtained mixture was sampled, and charged in a pressure tight carbon container (20 mmϕ), and pressed to form a powder at a pressure of 150 kgf/cm$^2$ and room temperature, whereby the anode and the cathode (polarizable electrodes) were prepared.

[Production of a non-aqueous electrolytic solution double layer capacitor]

The obtained anode and cathode, and aluminum metal plate (collector) (thickness: 0.5 mm), and polypropylene/polyethylene plate (separator) (thickness: 25 μm) were assembled to produce a cell. The cell was sufficiently vacuum-dried.

The cell was impregnated with the non-aqueous electrolytic solution to produce a non-aqueous electrolytic solution electric double layer capacitor.

<Measurement of electric conductivity of a non-aqueous electrolytic solution electric double layer capacitor>

While applying a constant current (5 mA) to the obtained capacitor, electric conductivity of the capacitor (conductivity of a 0.5 mol/ l quaternary ammonium salt solution) was measured using a conductivity meter (CDM210 manufactured by Radio Meter Trading Co., Ltd.). The results are shown in Table 2.

Incidentally, the electric conductivity of the non-aqueous electrolytic solution electric double layer capacitor at 25°C of 5.0mS/cm or higher is a level that does not cause a practical problem.

Example 6:

A non-aqueous electrolytic solution (viscosity at 25°C: 8.2 mPa· s (8.2 cP)) was prepared in the same manner as in Example 5, except that the amount of propylene carbonate was changed to 70 g, and the amount of the phosphazene derivative was changed to 30 g (30 wt%) in the "Preparation of a non-aqueous electrolytic solution" of Example 5. The obtained electrolytic solutions was evaluated for self-extinguishability or flame retardancy, and resistance to deterioration. Further, a non-aqueous electrolytic solution double layer capacitor was produced in the same manner as in Example 5, and assessed for electric conductivity. The results are shown in Table 2.

Comparative Example 2:

A non-aqueous electrolytic solution (viscosity at 25°C: 19.3 mPa· s (19.3 cP)) was prepared in the same manner as in Example 5, except that the amount of propylene carbonate was changed to 70 g, and 20 g of the phosphazene derivative was replaced by 30 g (30 wt%) of a phosphazene derivative having a chain structure which is represented by the following structural formula (12) and is liquid at ordinary temperature. The obtained electrolytic solutions was evaluated for self-extinguishability or flame retardancy, and resistance to deterioration. Further, a non-aqueous electrolytic solution double layer capacitor was produced in the same manner as that in Example 5, and assessed for electric conductivity. The results are shown in Table 2.

Structural formula (12):

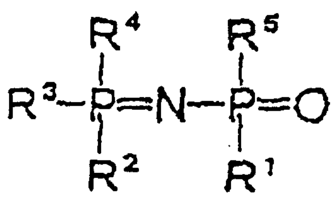

wherein $R^1$ to $R^5$ are respectively a methoxyethoxyethoxyethoxy group.

Comparative Example 3:

A non-aqueous electrolytic solution (viscosity at 25°C: 29.6 mPa· s (29.6 cP)) was prepared in the same manner as in Example 5, except that the amount of propylene carbonate was changed to 70 g, and 20 g of the phosphazene derivative was replaced by 30 g (30 wt%) of a phosphazene derivative (a cyclic phosphazene derivative represented by formula (1), in which R is a phenoxy group and n is 8) in the "Preparation of a non-aqueous electrolytic solution" of Example 5. The obtained electrolytic solution was evaluated for self-extinguishability or flame retardancy, and resistance to deterioration. Further, a non-aqueous electrolytic solution double layer capacitor was produced in the same manner as in Example 5 and assessed for electric conductivity. The results are shown in Table 2.

Table 2

| EXAMPLES | Immediately after preparation of electrolytic solution (Evaluation of deterioration) | | | After left for 2 months ( in gloved box) (Evaluation of deterioration) | | | Change of hues | Evaluation of deterioration | self-extinguishability or flame retardancy | Viscosity of non-aqueous electrolytic solution (before adding supporting salt) (mPa· (cP)) | Viscosity of non-aqueous electrolytic solution (mPa·(cP)) | Conductivity of non-aqueous electrolytic solution (mS/cm) |
|---|---|---|---|---|---|---|---|---|---|---|---|---|
| | Internal Resistance | HF density (ppm) | Moisture percentage (ppm) | Charging /discharging capacity (mAh/g) | HF density (ppm) | Moisture percentage (ppm) | | | | | | |
| Example 5 | 0.14 | Below 1 | 2 | 0.14 | below 1 | 2 | none | very stable | self-extinguishability | 4.1 | 7.6 | 6.3 |
| Example 6 | 0.15 | Below 1 | 2 | 0.15 | below 1 | 2 | none | stable | flame retardancy | 4.4 | 8.2 | 5.2 |
| Com. Example 2 | 0.25 | Below 1 | 2 | 0.25 | below 1 | 2 | none | sable | flame retardancy | 10.3 | 19.3 | 2.4 |
| Com. Example 3 | 0.28 | Below 1 | 2 | 0.28 | below 1 | 2 | turning black | unstable | combustibility | 15.1 | 29.6 | 1.8 |

As can be seen from Table 2, resistance to deterioration, viscosity, and conductivity are more excellent in the non-aqueous electrolytic solutions of Examples 5 and 6 than those of Comparative Examples 2 and 3. Particularly in Comparative Example 3, a change of hues is observed, and combustibility is manifested, thereby posing a problem with stability and safety. Therefore, it is revealed that the present invention can provide a non-aqueous electrolytic solution electric double layer capacitor which is excellent in resistance to deterioration, flame retardancy and conductivity, and further exerts high stability and high safety.

As described above, if the additive for a non-aqueous electrolytic solution of the present invention is added to a non-aqueous electrolytic solution in an energy storage device, it is possible to produce a non-aqueous electrolytic solution energy storage device that can exhibit excellent self-extinguishability or flame retardancy, resistance to deterioration, low interface resistance of the non-aqueous electrolytic solution, excellent low-temperature characteristics, high conductivity due to the low internal resistance, and good long-term stability, while maintaining its essential electrical characteristics. Thus, the present invention provides a non-aqueous electrolytic solution secondary cell and a non-aqueous electrolytic solution electric double layer capacitor which have excellent self-extinguishability or flame retardancy, and resistance to deterioration, and which have low internal resistance and excellent conductivity due to the low viscosity of the non-aqueous electrolytic solution containing the additive for the non-aqueous electrolytic solution.

Industrial Applicability of the Invention

The present invention provides an additive for a non-aqueous electrolytic solution. Non-aqueous electrolytic solutions have conventionally been a problem in energy storage devices such as non-aqueous electrolytic solution cells and the like in that they have been dangerous. With the present invention, these dangers can be minimized to largely improve the safety of the device. Consequently, it is apparent that the present invention will be industrially useful.

More than half of all notebook type personal computers, cellular phones and the like, which have been spreading rapidly, are still powered by non-aqueous electrolytic solution secondary cells. The present invention is added to the non-aqueous electrolytic solution secondary cells to exert long-term stability and extremely high safety, while maintaining electric characteristics required of cells. Consequently, the present invention will be highly valuable to industry.

At the same time, as an alternative to traditional cells, non-aqueous electrolytic solution electric double layer capacitors have been put into practical use recently as a new energy storage product is environmentally friendly. The present invention provides a non-aqueous electrolytic solution electric double layer capacitor having safety and high performance. At present, practical use of non-aqueous electrolytic solution electric double layer capacitors is evolving, and application thereof to electric automobiles, hybrid cars, and the like is widely spreading. Consequently, it can be said that the present invention has large industrial value.

## Claims

**1.** An additive for a non-aqueous electrolytic solution comprising a phosphazene derivative, which is solid at 25°C and represented by the following formula (1):

$$(PNR_2)_n \qquad \text{formula (1)}$$

wherein R represents a monovalent substituent or a halogen atom; and n represents a number of 3 to 6.

**2.** The additive for a non-aqueous electrolytic solution of claim 1, wherein the phosphazene derivative is at least one of a structure in which R is a methoxy group and n is 3 in formula (1), a structure in which R is at least one of a methoxy group and a phenoxy group and n is 4 in formula (1), a structure in which R is an ethoxy group and n is 4 in formula (1), a structure in which R is an isopropoxy group and n is 3 or 4 in formula (1), a structure in which R is an n-propoxy group and n is 4 in formula (1), a structure in which R is a trifluoroethoxy group and n is 3 or 4 in formula (1), and a structure in which R is a phenoxy group and n is 3 or 4 in formula (1).

**3.** A non-aqueous electrolytic solution secondary cell comprising:

a non-aqueous electrolytic solution including an additive for a non-aqueous electrolytic solution containing a phosphazene derivative represented by formula (1) and a supporting salt;

$(PNR_2)_n$ formula (1)

wherein R represents a monovalent substituent or a halogen atom; and n represents a number of 3 to 6;
an anode; and
a cathode.

**4.** The non-aqueous electrolytic solution secondary cell of claim 3, wherein the viscosity of the non-aqueous electrolytic solution at 25°C is 10mPa·s (10cP) or less.

**5.** The non-aqueous electrolytic solution secondary cell of claim 3, wherein the content of the phosphazene derivative in the non-aqueous electrolytic solution is 40 wt% or less.

**6.** The non-aqueous electrolytic solution secondary cell of claim 3, wherein the content of the phosphazene derivative in the non-aqueous electrolytic solution is 2 wt% or more.

**7.** The non-aqueous electrolytic solution secondary cell of claim 3, wherein the content of the phosphazene derivative in the non-aqueous electrolytic solution is 20 wt% or more.

**8.** The non-aqueous electrolytic solution secondary cell of claim 3, wherein the content of the phosphazene derivative in the non-aqueous electrolytic solution is 30 wt% or more.

**9.** The non-aqueous electrolytic solution secondary cell of claim 3, wherein the non-aqueous electrolytic solution contains an aprotic organic solvent.

**10.** The non-aqueous electrolytic solution secondary cell of claim 9, wherein the aprotic organic solvent contains a cyclic or chain ester compound.

**11.** The non-aqueous electrolytic solution secondary cell of claim 10, wherein the non-aqueous electrolytic solution contains $LiPF_6$ as the supporting salt, ethylene carbonate and/or propylene carbonate as the aprotic organic solvent, and 2 to 5 wt% of the phosphazene derivative.

**12.** The non-aqueous electrolytic solution secondary cell of claim 10, wherein the non-aqueous electrolytic solution contains $LiPF_6$ as the supporting salt, ethylene carbonate and/or propylene carbonate as the aprotic organic solvent, and more than 5 wt% of the phosphazene derivative.

**13.** The non-aqueous electrolytic solution secondary cell of claim 10, wherein the non-aqueous electrolytic solution contains $LiCF_3SO_3$ as the supporting salt, propylene carbonate as the aprotic organic solvent, and 2 to 5 wt% of the phosphazene derivative.

**14.** The non-aqueous electrolytic solution secondary cell of claim 10, wherein the non-aqueous electrolytic solution contains $LiCF_3SO_3$ as the supporting salt, propylene carbonate as the aprotic organic solvent, and 5 wt% or more of the phosphazene derivative.

**15.** A non-aqueous electrolytic solution electric double layer capacitor comprising:

a non-aqueous electrolytic solution including an additive for a non-aqueous electrolytic solution containing a phosphazene derivative represented by formula (1) and a supporting salt;

$(PNR_2)_n$ formula (1)

wherein R represents a monovalent substituent or a halogen atom; and n represents a number of 3 to 6;
an anode; and
a cathode.

**16.** The non-aqueous electrolytic solution electric double layer capacitor of claim 15, wherein the viscosity of the non-aqueous electrolytic solution at 25°C is 10mPa·s (10cP) or less.

**17.** The non-aqueous electrolytic solution electric double layer capacitor of claim 15, wherein the content of the phosphazene derivative in the non-aqueous electrolytic solution is 40 wt% or less.

**18.** The non-aqueous electrolytic solution electric double layer capacitor of claim 15, wherein the content of the phosphazene derivative in the non-aqueous electrolytic solution is 2 wt% or more.

**19.** The non-aqueous electrolytic solution electric double layer capacitor of claim 15, wherein the content of the phosphazene derivative in the non-aqueous electrolytic solution is 20 wt% or more.

**20.** The non-aqueous electrolytic solution electric double layer capacitor of claim 15, wherein the content of the phosphazene derivative in the non-aqueous electrolytic solution is 30 wt% or more.

**21.** The non-aqueous electrolytic solution electric double layer capacitor of claim 15, wherein the non-aqueous electrolytic solution contains an aprotic organic solvent.

**22.** The non-aqueous electrolytic solution electric double layer capacitor of claim 21, wherein the aprotic organic solvent contains a cyclic or chain ester compound.

**INTERNATIONAL SEARCH REPORT**

International application No.
PCT/JP01/07689

A. CLASSIFICATION OF SUBJECT MATTER
Int.Cl$^7$ H01M 10/40, 6/16, H01G 9/038

According to International Patent Classification (IPC) or to both national classification and IPC

B. FIELDS SEARCHED

Minimum documentation searched (classification system followed by classification symbols)
Int.Cl$^7$ H01M 10/40, 6/16, H01G 9/038

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)
dialog file352(wpi/j) phosphazene, IC=H01M-010,IC=H01G-009,MC=X16-B01?
jicst file010(jois) phosphazene, capacitor, nonaqueous electrolytic solution, organic electrolytic solution, nonaqueous solvent, kw: lithium cell, electrolytic solution (in Japanese)

C. DOCUMENTS CONSIDERED TO BE RELEVANT

| Category* | Citation of document, with indication, where appropriate, of the relevant passages | Relevant to claim No. |
|---|---|---|
| P,X | JP 2001-217156 A (Bridgestone Corporation), 10 August, 2001 (10.08.01), Claims 1 to 9; Par. Nos. [0035], [0044] to [0064], etc. (Family: none) | 1,2,15-22 |
| P,X | JP 2001-217155 A (Bridgestone Corporation), 10 August, 2001 (10.08.01), Claims 1 to 10; Par. Nos. [0052] to [0071], etc. (Family: none) | 1,2,15-12 |
| P,X | JP 2001-102088 A (Bridgestone Corporation), 13 April, 2001 (13.04.01), Claims 1 to 9; Par. Nos. [0012] to [0017], [0035] to [0055], etc. & WO 01/09973 A & JP 2001-217007 A & JP 2001-217006 A & JP 2001-217005 A | 1-14 |
| P,X | JP 2001-217001 A (Bridgestone Corporation), 10 August, 2001 (10.08.01), Claims 1 to 9; Par. Nos. [0011] to [0054], etc. & WO 2001-39314 A & JP 2001-217002 A & JP 2001-217003 A & JP 2001-217004 A | 1-14 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 October, 2001 (18.10.01) | 30 October, 2001 (30.10.01) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP01/07689

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2001-52736 A (Toyota Central Research and Development Laboratories Inc.), 23 February, 2001 (23.02.01), Claims 1, 2; examples, etc. (Family: none) | 1-14 |
| P,X | IP 2001-23687 A (Sony Corporation), 26 January, 2001 (26.01.01), Claims 1 to 14; Par. Nos. [0024] to [0039]; examples, etc. (Family: none) | 1-14 |
| X<br>Y<br>A | JP 2001-30740 A (Toyota Central Research and Development Laboratories Inc.), 28 January, 2000 (28.01.00), Claim 1; Par. Nos. [0020] to [0027]; examples, etc. (Family: none) | 1-6,9-11,13, 15-18,21,22<br>7,8,12,14, 19,20 |
| X<br>Y<br>A | JP 11-191431 A (Sony Corporation), 13 July, 1999 (13.07.99), Claims 1 to 7; Par. Nos. [0033] to [0037]; examples, etc. (Family: none) | 1-7,9-14<br>15-8,21,22<br>8,20 |
| X<br>Y<br>A | JP 6-13108 A (Bridgestone Corporation), 21 January, 1994 (21.01.94), Claims 1 to 3; Par. Nos. [0015] to [0033], etc. (Family: none) | 1-10,12,14<br>16-22<br>11,13,15 |
| X<br>A | JP 5-74467 A (Showa Denko K.K.), 26 March, 1993 (26.03.93), Claim 1, etc. (Family: none) | 1-3,6-8,15, 18-20<br>4,5,9-14,16 17,21,22 |
| X<br>A | JP 4-301370 A (Showa Denko K.K.), 23 October, 1992 (23.10.92), Claim 1, etc. (Family: none) | 1-3,6-8,15, 18-20<br>4,5,9-14,16, 17,21,22 |
| Y | JP 9-50944 A (Nippon Zeon Co., Ltd.), 18 February, 1997 (18.02.97), Par. No. [0015], etc. (Family: none) | 15-22 |
| Y | JP 11-185808 A (Sunstar Inc.), 09 July, 1999 (09.07.99), Par. No. [0001], etc. (Family: none) | 15-22 |

Form PCT/ISA/210 (continuation of second sheet) (July 1992)

**INTERNATIONAL SEARCH REPORT**

International application No.
PCT/JP01/07689

**Box I Observations where certain claims were found unsearchable (Continuation of item 1 of first sheet)**

*This international search report has not been established in respect of certain claims under Article 17(2)(a) for the following reasons:*

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 2 of first sheet)**

This International Searching Authority found multiple inventions in this international application, as follows:

Claim 1 is characterized by using a specific phosphazene derivative which is solid at 25 ° as an additive for a non-aqueous liquid electrolyte, whereas, claim 3 (cell) and claim 15 (capacitor) use a specific phosphazene derivative which is not limited to be solid at 25 °. Since whether the electrolyte component of a cell or a capacitor is solid or liquid affects markedly the conductivity and other performance capabilities thereof, there is no relationship among the above three inventions involving one or more of the same or corresponding special technical features.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☐ No protest accompanied the payment of additional search fees.

Form PCT/ISA/210 (continuation of first sheet (1)) (July 1992)